# EUROPEAN PATENT APPLICATION

(11) **EP 4 819 035 A1**
(43) Date of publication of application: **07.10.2026**
(21) Application number: 24899150.7
(22) Date of filing: 24.05.2024
(51) Int. Cl.: G06T 7/00

(54) **DEFECT DETECTION METHOD AND SYSTEM**

(30) Priority: 07.12.2023 CN 202311679792
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: LI, Hongyuan, Ningde, Fujian 352100 (CN); JIANG, Ping, Ningde, Fujian 352100 (CN); MAO, Yuyang, Ningde, Fujian 352100 (CN); QI, Lei, Ningde, Fujian 352100 (CN)
(74) Representative: Kraus & Lederer PartGmbB
(86) International application number: PCT/CN2024/095271
(87) International publication number: WO 2025/118498

(57) **Abstract**

Disclosed in the present application are a defect detection method and system, which belong to the technical field of defect detection. The present application involves: obtaining battery cell images acquired from multiple angles, the battery cell images including a tab portion of a battery cell; performing, by a target detection model, tab defect detection on the battery cell images acquired from multiple angles to obtain a tab detection result, the target detection model being configured to perform tab positioning and tab defect identification; and completing defect detection based on the tab detection result. By using a target detection model to perform tab defect detection on battery cell images acquired from multiple angles, a defect in a tab portion is accurately detected. Compared with manual identification for a tab defect, this improves the efficiency and precision of tab defect detection, and increases the identification rate of minor tab defects.

## Description

### CROSS-REFERENCE TO RELATED APPLICATION

The present application claims priority to Chinese Patent Application No. 202311679792.5 filed on December 7, 2023, which is incorporated herein by reference in its entirety.

### TECHNICAL FIELD

The present application relates to the technical field of defect detection, and in particular, to a defect detection method and system.

### BACKGROUND

Currently, in the battery cell process of battery production, there are multiple handling operations during the adapter piece welding, top cover welding, and core assembly, which may cause cracking and wrinkles at the tab portions of the battery cells. The cracking or severe wrinkles at the tab portion will block the current circulation of the cell core, and even cause excessive heating of the battery cell in severe cases, resulting in serious safety issues such as fire of the battery cell. Tab cracking has always been a difficulty and a pain point to be solved in the production of cell cores. Therefore, solving the problem of tab cracking in the production process of battery cells will greatly reduce the safety risk of finished cell cores and improve the product quality.

In the current tab defect detection, a manual visual inspection method is adopted, or a charging and discharging cycle detection is performed on each battery cell. Subtle tab cracking will not be detected, and each battery cell is charged and discharged, resulting in low detection efficiency and precision.

### SUMMARY

The primary purpose of the present application is to provide a defect detection method and system, aiming to solve the technical problems of low detection precision and efficiency in the prior art.

In a first aspect, an embodiment of the present application provides a defect detection method. The defect detection method includes the following steps:
obtaining battery cell images acquired from multiple angles, the battery cell images including a tab portion of a battery cell;
performing, by a target detection model, tab defect detection on the battery cell images acquired from multiple angles to obtain a tab detection result, the target detection model being configured to perform tab positioning and tab defect identification; and
completing defect detection based on the tab detection result.

This embodiment provides a defect detection method. The defect detection method includes: obtaining battery cell images acquired from multiple angles, the battery cell images including a tab portion of a battery cell; performing, by a target detection model, tab defect detection on the battery cell images acquired from multiple angles to obtain a tab detection result, the target detection model being configured to perform tab positioning and tab defect identification; and completing defect detection based on the tab detection result. By using a target detection model to perform tab defect detection on battery cell images acquired from multiple angles, a defect in a tab portion is accurately detected. Compared with manual identification for a tab defect, this improves the efficiency and precision of tab defect detection, and increases the identification rate of minor tab defects.

In some embodiments, the target detection model includes an input layer, a feature extraction layer, a feature fusion layer, and an output layer;
performing, by the target detection model, the tab defect detection on the battery cell images acquired from multiple angles to obtain the tab detection result includes:
performing, by the input layer in the target detection model, image enhancement on the battery cell images acquired from multiple angles to obtain enhanced battery cell images;
performing feature extraction on the enhanced battery cell images by the feature extraction layer in the target detection model to obtain extracted features;
performing feature fusion on the extracted features by the feature fusion layer in the target detection model to obtain a fused feature; and
performing tab position detection or tab defect detection on the fused feature by the output layer in the target detection model to obtain the tab detection result.

In this embodiment, by corresponding processing of each structural layer in the target detection model, the image features are quickly and accurately extracted, and the tab position detection or the tab defect detection is performed based on the image features, which will meet the requirement of quickly completing real-time tab defect detection without affecting the production of battery cells.

In some embodiments, the target detection model includes a first target detection model, and the first target detection model is obtained by training with battery cell sample images annotated with a tab region and a tab misalignment region;
performing, by the target detection model, the tab defect detection on the battery cell images acquired from multiple angles to obtain the tab detection result includes:
performing, by an input layer in the first target detection model, image enhancement on the battery cell images acquired from multiple angles to obtain enhanced battery cell images;
performing feature extraction on the enhanced battery cell images by a feature extraction layer in the first target detection model to obtain first extracted tab features;
performing feature fusion on the first extracted tab features by a feature fusion layer in the first target detection model to obtain a first fused tab feature;
performing tab positioning on the first fused tab feature by an output layer in the first target detection model to obtain a tab detection region; and
obtaining the tab detection result based on the tab detection region.

In the technical solution of the embodiment of the present application, by detecting the tab region in the battery cell images using the first target detection model, the tab position is first determined, and the tab is roughly positioned, thereby improving the precision of tab defect detection.

In some embodiments, the defect detection method further includes:
cropping the battery cell images based on the tab detection region to obtain tab images.

In this embodiment, after the tab detection region is identified, the battery cell images are cropped to obtain the tab images, thereby facilitating subsequent precise identification of the tab defects directly through the tab images.

In some embodiments, the target detection model further includes a second target detection model, and the second target detection model is obtained by training with tab sample images annotated with a tab defect;
obtaining the tab detection result based on the tab detection region includes:
inputting the tab images into the second target detection model;
performing image enhancement on the tab images by an input layer in the second target detection model to obtain enhanced tab images;
performing feature extraction on the enhanced tab images by a feature extraction layer in the second target detection model to obtain second extracted tab features;
performing feature fusion on the second extracted tab features by a feature fusion layer in the second target detection model to obtain a second fused tab feature;
performing tab defect detection on the second fused tab feature by an output layer in the second target detection model to obtain a tab defect type; and
obtaining the tab detection result based on the tab defect type.

In the technical solution of the embodiment of the present application, by detecting the defect in the tab images using the second target detection model, the tab defect type is quickly detected, thereby solving the problem of tab misalignment in the battery cell production process and improving the identification rate of small defects and minor defects.

In some embodiments, obtaining the tab detection result based on the tab defect type includes:
obtaining a defect length corresponding to the tab defect type;
comparing the defect length with a preset length threshold; and
determining that the tab detection result is that the tab has a defect when the defect length is greater than the preset length threshold.

In this embodiment, by obtaining the defect length corresponding to the tab defect type and comparing the defect length with the standard length threshold, it is quickly determined that the tab length has a defect.

In some embodiments, the defect detection method further includes:
determining that the tab detection result is that the tab has no defect when the defect length is less than or equal to the preset length threshold.

In this embodiment, by comparing the defect length with the standard length threshold, when the defect length is less than or equal to the standard length threshold, it is quickly determined that the tab length has no defect.

In some embodiments, obtaining the tab detection result based on the tab defect type includes:
obtaining defect area corresponding to the tab defect type;
comparing the defect area with a preset area threshold; and
determining that the tab detection result is that the tab has a defect when the defect area is greater than the preset area threshold.

In this embodiment, by obtaining the defect area corresponding to the tab defect type and comparing the defect area with the standard area threshold, it is quickly determined that the tab area has a defect.

In some embodiments, the defect detection method further includes:
determining that the tab detection result is that the tab has no defect when the defect area is less than or equal to the preset area threshold.

In the technical solution of the embodiment of the present application, by comparing the defect area with the standard area threshold, it will be quickly determined that the tab area has no defect when the defect area is less than or equal to the standard area threshold.

In some embodiments, obtaining the tab detection result based on the tab detection region includes:
detecting whether there is tab misalignment in the tab detection region; and
determining the tab detection result as tab misalignment when there is tab misalignment in the tab detection region.

In this embodiment, whether there is tab misalignment is detected in the tab detection region obtained by detecting using the first target detection model, thereby achieving the tab misalignment defect detection and improving the tab detection range.

In some embodiments, the defect detection method further includes:
cropping a region with tab misalignment from the tab images to obtain cropped tab images.

In this embodiment, when there is tab misalignment in the tab image, the tab misalignment region in the tab image is cropped to obtain the cropped tab image, thereby improving the precision of subsequent tab defect detection.

In some embodiments, before performing, by the target detection model, the tab defect detection on the battery cell images acquired from multiple angles to obtain the tab detection result, the method further includes:
obtaining battery cell sample images, where the battery cell sample images are annotated with a tab region and a tab misalignment region; and
training an initial target detection network with the battery cell sample images to obtain a first target detection model.

In this embodiment, the battery cell sample images are obtained, and the battery cell sample images are annotated with the tab region and the tab misalignment region. Therefore, the initial target detection network is trained with the battery cell sample images of the tab region and the tab misalignment region, such that the position and misalignment region of the tab portion obtained for the input battery cell images are similar to the annotated real information, thereby achieving the purpose of detecting the tab position and the tab misalignment region.

In some embodiments, before performing, by the target detection model, the tab defect detection on the battery cell images acquired from multiple angles to obtain the tab detection result, the method further includes:
obtaining tab sample images, where the tab sample images are annotated with a tab defect; and
training an initial target detection network with the tab sample images to obtain a second target detection model.

In the technical solution of the embodiment of the present application, the tab sample images are obtained, the tab sample images are annotated with a tab defect, and the initial target detection network is trained with the tab sample images. Since a large amount of information is lost during the scaling of the image, the second target detection model is obtained by training with the tab sample images, thereby improving the model training precision.

In some embodiments, completing the defect detection based on the tab detection result includes:
outputting a tab defect type and a tab defect position when the tab detection result is that the tab has a defect; and
determining that a battery cell corresponding to the tab does not meet production requirements and discarding the battery cell.

In this embodiment, when the tab detection result is that the tab has a defect, a specific tab defect type and a tab defect position may be output, such that the battery cell to which the tab having a defect belongs is determined to not meet the production requirements, and the battery cell is discarded, thereby achieving intelligent control of the production line, and effectively ensuring the production rhythm of the production line.

In a second aspect, an embodiment of the present application further provides a defect detection system. The defect detection system includes:
an image acquisition module configured to acquire battery cell images including a tab portion from multiple angles; and
an upper computer configured to determine whether the tab has a defect based on the battery cell images acquired from multiple angles.

In the technical solution of the embodiment of the present application, the image acquisition module acquires the battery cell images including the tab portion from multiple angles, such that a complete battery cell image will be obtained, thereby improving the detection accuracy. Moreover, the upper computer determines whether the tab has a defect, thereby improving the efficiency and precision of the tab defect detection and the identification rate of minor defects of the tab.

In some embodiments, there are two image acquisition modules, each image acquisition module includes at least two image acquisition apparatuses, and the two image acquisition modules are respectively located at an end part of an anode tab and an end part of a cathode tab;
the image acquisition module is configured to perform multi-angle image acquisition on battery cell images including a tab portion to obtain battery cell images acquired from multiple angles, and configured to send the battery cell images to the upper computer.

In the technical solution of the embodiment of the present application, two image acquisition modules are used to acquire a battery cell image including an anode tab and a battery cell image including a cathode tab, respectively, so as to perform tab defect detection separately, thereby preventing the mixing of the anode tab image and the cathode tab image from affecting the detection result.

In some embodiments, there are two anode tabs and two cathode tabs; the image acquisition module includes a first image acquisition module and a second image acquisition module;
two image acquisition apparatuses in the first image acquisition module are respectively located at end parts of the two anode tabs, and two image acquisition apparatuses in the second image acquisition module are respectively located at end parts of the two cathode tabs.

In the technical solution of the embodiment of the present application, by means of the plurality of image acquisition apparatuses, images of the anode tab or the cathode tab are acquired from multiple angles, such that the surface of the tab is completely acquired, and a complete tab image is obtained, thereby improving the detection accuracy.

In some embodiments, the system further includes at least one light source, and the at least one light source and the image acquisition module are disposed opposite to each other on two sides of a battery cell;
the at least one light source is configured to provide a light source during an image acquisition process of the image acquisition module acquiring images of the battery cell including a tab portion.

In the technical solution of the embodiment of the present application, by further arranging the light source in the system, supplementary lighting is performed when the image acquisition apparatus acquires the battery cell image, such that a clear battery cell image including the tab portion is captured, thereby improving the capturing effect.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions in the embodiments of the present application or in the prior art, the drawings required for illustrating the embodiments or description of the prior art are briefly described below. Apparently, the drawings in the following description illustrate merely some embodiments of the present application, and those of ordinary skills in the art may still derive other drawings from the structures illustrated in these drawings without creative efforts.
FIG. 1 is a schematic flowchart of an embodiment of a defect detection method according to the embodiments of the present application;
FIG. 2 is another schematic flowchart of an embodiment of a defect detection method according to the embodiments of the present application;
FIG. 3 is yet another schematic flowchart of an embodiment of a defect detection method according to the embodiments of the present application;
FIG. 4 is still another schematic flowchart of an embodiment of a defect detection method according to the embodiments of the present application;
FIG. 5 is an overall schematic flowchart of defect detection in an embodiment of a defect detection method according to the embodiments of the present application;
FIG. 6 is a schematic structural diagram of an embodiment of defect detection according to the embodiments of the present application; and
FIG. 7 is another schematic structural diagram of an embodiment of defect detection according to the embodiments of the present application.

Reference numerals in the detailed description are as follows:
defect detection system 1;
image acquisition module 10; image acquisition apparatus 101; upper computer 20; light source 30;
tab 2;
anode tab 21; cathode tab 22.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, the technical terms such as "first" and "second" are only used to distinguish different objects and should not be interpreted as indicating or implying the relative importance or implicitly indicating the number, specific order, or priority of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

Currently, a common method for detecting tab defects is manual visual inspection, which requires workers to manually flip over the cell cores one by one and inspect the tabs during the battery cell production process to observe whether defects such as tab cracking exist. However, this method is slow and inefficient, and has a low detection rate. It requires significant manpower and does not guarantee 100% detection of defective products with tab cracks. Alternatively, the battery is subjected to a charging and discharging cycle, and the cycle data are recorded; the average charge or discharge voltage of the battery to be tested in each charging and discharging cycle is calculated to obtain an abnormal cycle; according to the charging and discharging curve of the abnormal cycle, if there is charging and discharging cycle data where a data point deviates from the charging and discharging curve by a difference greater than a first preset threshold, it is determined that there is tab cracking. By continuously performing charging and discharging cycle detection on the battery to determine whether there is a defect, only relatively large defects are detected, and subtle tab defects will not be detected. Meanwhile, the detection process requires charging and discharging detection on each battery. As a result, the detection process is complex and inefficient.

Based on the above considerations, to improve the detection precision and efficiency of tab defect detection, after in-depth research, a defect detection method and system are proposed, and the method and system are applicable to various scenarios of defect detection in the battery production process, for example, in the tab defect detection in the battery cell adapter piece welding, top cover welding, or core assembly processes. In the above processes, there are multiple handling operations, which may cause problems such as cracking and wrinkles at the tab portions of the battery cell, thereby causing blockage to the current circulation of the battery cell, and even causing excessive heating of the battery cell in severe cases, resulting in serious safety issues such as fire of the battery cell.

In the present application, a target detection model is constructed in advance based on a deep learning algorithm, and the tab portions in the battery cell are photographed from multiple angles by using an industrial camera during the transportation of the battery cell or during the grabbing of the battery cell by the clamping jaw, so as to obtain multi-angle battery cell images including the tab portions. Tab positioning and defect detection are performed on the multi-angle battery cell images by using the target detection model, such that the detection will be quickly and accurately completed, and the detection precision and efficiency are improved.

To better understand the embodiments of the present application, a defect detection method and system provided in the embodiments of the present application will be described in detail below with reference to the drawings.

The execution body of the defect detection method provided in the embodiments of the present application may be a defect detection system. The defect detection system may be configured to detect various defects of the tab, and may also perform defect detection on other objects. This is not limited in this embodiment.

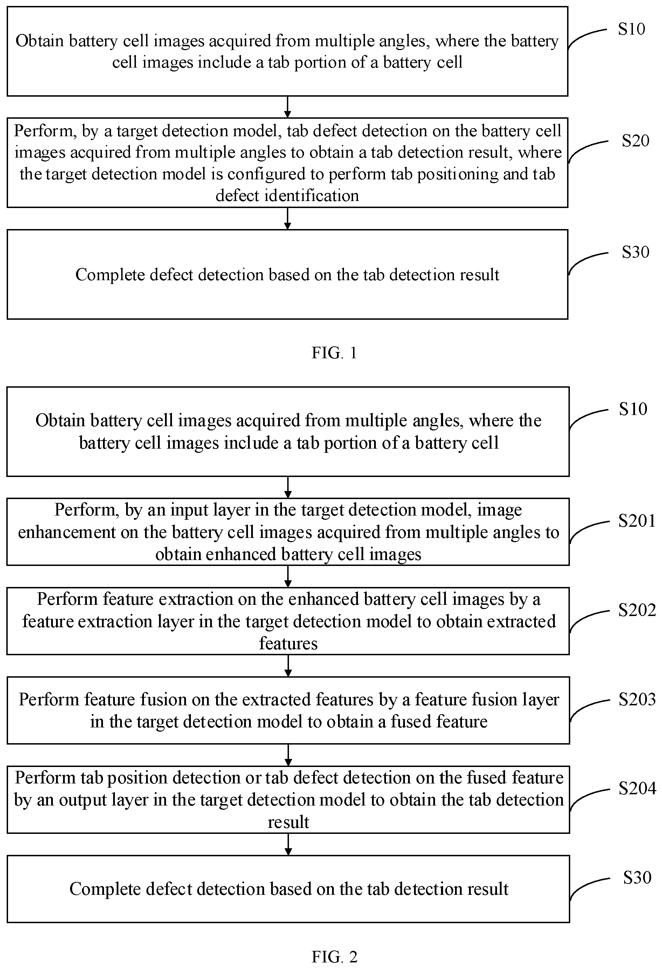

In some embodiments of the present application, referring to FIG. 1, an embodiment of the present application provides a defect detection method. The defect detection method may include the following steps.

In step S10, battery cell images acquired from multiple angles are obtained, where the battery cell images include a tab portion of a battery cell.

It should be noted that the battery cell in this embodiment is a cell core. Due to the production processes, at this point, the tab adapter piece of the battery cell may have been welded, the surface of the tab has become arc-shaped, and the surface of the tab will not be completely acquired from one angle. Therefore, to ensure the accuracy of the detection, battery cell images acquired from multiple angles may be obtained.

In a specific implementation, the battery cell images may be acquired from multiple angles by a plurality of image acquisition apparatuses to obtain a complete battery cell image.

It should be noted that the battery cell images include the tab portion of the battery cell, and may also include other portions. By acquiring battery cell images in a large range, an image of the complete tab portion is obtained.

In step S20, tab defect detection is performed, by a target detection model, on the battery cell images acquired from multiple angles to obtain a tab detection result, where the target detection model is configured to perform tab positioning and tab defect identification.

It should be noted that the target detection model may be established in advance. By collecting a plurality of image samples and annotating the image samples, the target detection model is generated through training.

As an embodiment, the target detection model may be configured for tab positioning and tab defect identification, or the target detection model may only perform tab defect identification or tab positioning.

In a specific implementation, the target detection model is mainly configured for target detection, and may be obtained by training a yolov5 network. The tab defect detection is performed on the battery cell images by the target detection model to obtain the tab detection result.

It should be noted that the tab detection result may be that the tab has a defect or the tab has no defect.

Illustratively, the tab defect detection result may be information such as a tab defect type or a tab defect length, width, or area.

In step S30, the defect detection is completed based on the tab detection result.

It should be understood that the defect detection is completed based on the tab detection result. For example, if the tab detection result indicates that the tab has a defect, a specific defect type and a defect position may be output, such that secondary detection may be performed according to the defect type and the defect position, or the battery cell corresponding to the tab having a defect may be removed from the production line and subjected to disposal processing.

The defect detection method provided in this embodiment includes: obtaining battery cell images acquired from multiple angles, the battery cell images including a tab portion of a battery cell; performing, by a target detection model, tab defect detection on the battery cell images acquired from multiple angles to obtain a tab detection result, the target detection model being configured to perform tab positioning and tab defect identification; and completing defect detection based on the tab detection result. By using a target detection model to perform tab defect detection on battery cell images acquired from multiple angles, a defect in a tab portion will be accurately detected. Compared with manual identification for a tab defect, this improves the efficiency and precision of tab defect detection, and increases the identification rate of minor tab defects.

In some embodiments, the target detection model includes an input layer, a feature extraction layer, a feature fusion layer, and an output layer.

It should be noted that the target detection model is obtained by training a yolov5 initial target detection network, and the structure of the yolov5 network mainly includes four parts: an input end, a backbone network (Backone), Neck, and prediction. Therefore, the target detection model obtained by training mainly includes an input layer, a feature extraction layer (Backone), a feature fusion layer (Neck), and an output layer (Head (Prediction)).

The input layer is configured to perform image enhancement on an input image, for example, operations such as image cropping and splicing, random scaling, random cropping, random arrangement, and affine transformation.

The feature extraction layer is configured to perform feature extraction, and the feature extraction layer includes a convolutional neural network that aggregates features at different image granularities to form image features, thereby extracting features and obtaining image features.

The feature fusion layer is configured to fuse features and includes a series of network layers that mix and combine image features. It performs feature fusion and transfers a fused feature to the output layer.

The output layer is configured to perform related detection or prediction, such as predicting image features, generating bounding boxes, and predicting the class.

In some embodiments, referring to FIG. 2, the step of performing, by the target detection model, the tab defect detection on the battery cell images acquired from multiple angles to obtain the tab detection result includes the following steps.

In step S201, image enhancement is performed, by the input layer in the target detection model, on the battery cell images acquired from multiple angles to obtain enhanced battery cell images.

It should be understood that image enhancement, such as cropping and splicing, may be performed on the battery cell images acquired from multiple angles through the input layer in the target detection model, thereby improving the quality and definition of the images and obtaining the enhanced battery cell images.

It should be noted that performing image enhancement further includes preprocessing the battery cell images acquired from multiple angles, including denoising, removing artifacts, adjusting the brightness and contrast of the images, and the like, thereby reducing the impact of noise and artifacts.

In step S202, feature extraction is performed on the enhanced battery cell images by the feature extraction layer in the target detection model to obtain extracted features.

In this embodiment, the feature extraction layer in the target detection model may perform feature extraction on the enhanced battery cell images, so as to extract a tab feature, a tab defect feature, or the like.

The feature extraction layer in the target detection model includes a convolutional neural network, and the feature extraction is performed on the enhanced battery cell images by a convolution kernel in the convolutional neural network, thereby obtaining the extracted features.

In a specific implementation, a plurality of convolution blocks may be combined together, and the convolution blocks may contain different convolution kernel sizes and strides to capture features of different scales and obtain multi-scale extracted features.

In step S203, feature fusion is performed on the extracted features by the feature fusion layer in the target detection model to obtain a fused feature.

It should be noted that the feature fusion layer in the target detection model is configured to perform feature fusion on the multi-scale extracted features to obtain the fused feature.

In a specific implementation, among the multi-scale extracted features, low-level features have higher resolution and contain more position and detail information. However, due to fewer convolutions, they have lower semantic meaning and more noise. High-level features have stronger semantic information, but their resolution is very low, resulting in poor perception of details. Therefore, the extracted features of different scales are fused, thereby improving the performance.

In step S204, tab position detection or tab defect detection is performed on the fused feature by the output layer in the target detection model to obtain the tab detection result.

It should be understood that the output layer in the target detection model is a prediction layer, which predicts the fused feature output by the feature fusion layer to generate a bounding box and a predicted class.

In a specific implementation, the fused feature is predicted by the output layer to obtain the bounding box for the tab position and the result that the predicted target class is tab. Additionally, the bounding box for the electrode plate position on the battery cell and the result that the predicted target class is electrode plate may also be obtained, and the tab position and the predicted target class are taken as the tab detection result.

In a specific implementation, the fused feature is predicted by the output layer, so that the bounding boxes for various tab defects and the predicted specific types of the tab defects are obtained. For example, the predicted tab defect types are tab cracking, tab wrinkling, and the like. The position of the tab defect and the specific type of the tab defect are used as the tab detection result.

In this embodiment, by corresponding processing of each structural layer in the target detection model, the image features are quickly and accurately extracted, and the tab position detection or the tab defect detection is performed based on the image features, which will meet the requirement of quickly completing real-time tab defect detection without affecting the production of battery cells.

In some embodiments, to improve the precision of tab defect detection, tab positioning may be first performed on the captured battery cell images by the target detection model, and then tab defect detection is performed on the tab-positioned images, thereby improving the precision of tab defect detection.

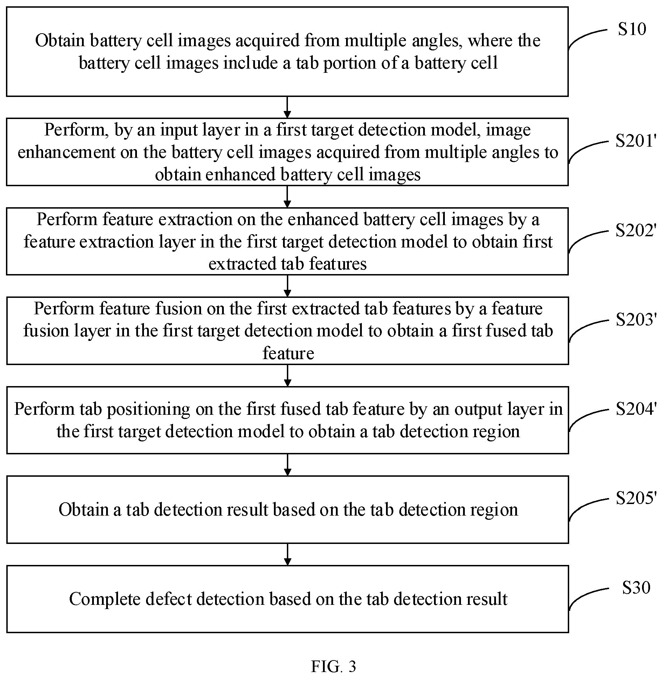

In some embodiments, referring to FIG. 3, the target detection model includes a first target detection model. The first target detection model is obtained by training with battery cell sample images annotated with a tab region and a tab misalignment region.

It should be noted that the first target detection model is configured to detect the tab position in the battery cell image and identify the class of each target in the battery cell image.

In a specific implementation, the first target detection model is obtained by training with battery cell sample images annotated with a tab region and a tab misalignment region, such that the tab region and the tab misalignment region are detected by the first target detection model.

In some embodiments, the step of performing, by the target detection model, tab defect detection on the battery cell images acquired from multiple angles to obtain the tab detection result includes the following steps.

In step S201', image enhancement is performed, by an input layer in the first target detection model, on the battery cell images acquired from multiple angles to obtain enhanced battery cell images.

It should be noted that, if the input layer in the first target detection model is configured for image enhancement, the input battery cell images acquired from multiple angles may be subjected to image enhancement, which may specifically be random transformation, cropping, splicing, or the like, such that the battery cell images are configured as images with richer and more complex feature and target combinations, that is, enhanced battery cell images.

In step S202', feature extraction is performed on the enhanced battery cell images by a feature extraction layer in the first target detection model to obtain first extracted tab features.

It should be understood that after the enhanced battery cell images are obtained, the enhanced battery cell images are transmitted to the feature extraction layer in the first target detection model, and the feature extraction of the enhanced battery cell images is performed by using the convolution operation in the feature extraction layer, thereby obtaining the first extracted tab features.

Illustratively, the first extracted tab features are features that represent different targets in the battery cell images, such as the position of the tab and the position of the electrode plate.

In step S203', feature fusion is performed on the first extracted tab features by a feature fusion layer in the first target detection model to obtain a first fused tab feature.

In a specific implementation, after the first tab features are obtained, the first extracted tab features that have been extracted may be combined by using the feature fusion layer in the first target detection model, and the feature fusion layer performs operations such as up-sampling and feature splicing (concat) to transform the first extracted tab features. Finally, the features are divided into three outputs, and each output represents a feature in which targets of different sizes are summarized, so as to obtain the first fused tab features.

It should be understood that targets of different sizes may be predicted based on the first fused tab feature, for example, the position of the tab, the position of the electrode plate, and the like.

In step S204', tab positioning is performed on the first fused tab feature by an output layer in the first target detection model to obtain a tab detection region.

It should be understood that the first fused tab feature may be transmitted to the output layer in the first target detection model for prediction, and the predicted target position and class may be output.

Illustratively, the tab positioning may be performed on the first fused tab feature by the output layer in the first target detection model, so that the tab detection region in the battery cell images is annotated and the class annotated is "tab".

In step S205', a tab detection result is obtained based on the tab detection region.

It should be noted that the tab detection result is obtained based on the tab detection region.

Illustratively, for example, the tab detection region is detected to detect whether there is a defect in the tab.

In the technical solution of the embodiment of the present application, by detecting the tab region in the battery cell images using the first target detection model, the tab position is first determined, and the tab is roughly positioned, thereby improving the precision of tab defect detection.

In some embodiments, whether the tabs are misaligned may be detected based on the tab detection region. Since the first target detection model is obtained by training with the battery cell sample images annotated with a tab misalignment region, the first target detection model may also detect whether the tabs are misaligned in the battery cell images.

As an example, obtaining the tab detection result based on the tab detection region includes:
detecting whether there is tab misalignment in the tab detection region; and
determining the tab detection result as tab misalignment when there is tab misalignment in the tab detection region.

It should be noted that whether there is tab misalignment may be annotated in the tab detection. Therefore, whether there is tab misalignment in the tab detection region will be detected.

As an example, the image of the tab detection region may also be directly compared with the image without tab misalignment, so as to determine whether there is tab misalignment in the tab detection region.

In a specific implementation, if there is no tab misalignment in the tab detection region, it is preliminarily determined that the tab has no defect, and the tab may be further subjected to defect detection.

In this embodiment, if there is tab misalignment in the tab detection region, the tab detection result may be set as tab misalignment, and the battery cell image is first annotated as tab misalignment. In addition, whether there are other defects in the tab is further detected. Therefore, it will be determined whether the tab defect is a tab surface defect or a defect in the tab misalignment region during the subsequent tab defect detection.

In this embodiment, whether there is tab misalignment is detected in the tab detection region obtained by detecting using the first target detection model, thereby achieving the tab misalignment defect detection and improving the tab detection range.

Illustratively, when it is determined that the tab detection result is tab misalignment, to improve the subsequent detection efficiency, the tab misalignment region may be cropped from the image. Therefore, after the step of determining that the tab detection result is tab misalignment when there is tab misalignment in the tab detection region, the method further includes:
cropping a region with tab misalignment from the tab images to obtain cropped tab images.

It should be noted that after tab positioning is performed, the specific defect detection of the tab will also be performed. To improve the detection efficiency, the tab image representing the tab detection region may be cropped. That is, the tab misalignment region in the tab image is cropped, and the tab misalignment region is cropped from the tab image to obtain the cropped tab image.

As an example, after the cropped tab image is obtained, more specific tab defect detection may also be performed on the cropped tab image.

In this embodiment, when there is tab misalignment in the tab image, the tab misalignment region in the tab image is cropped to obtain the cropped tab image, thereby improving the precision of subsequent tab defect detection.

In some embodiments, the first target detection model will quickly and accurately detect the tab position and class in the battery cell image. Therefore, the process of establishing the first target detection model includes:
obtaining battery cell sample images, where the battery cell sample images are annotated with a tab region and a tab misalignment region; and
training an initial target detection network with the battery cell sample images to obtain the first target detection model.

It should be noted that the battery cell sample images may be acquired images of various different battery cells, or may be images of the battery cell in different forms, or may be images of the battery cell during different production processes. This is not limited in this embodiment.

It should be noted that the battery cell sample images may be acquired from multiple angles by an image acquisition apparatus. The battery cell sample image includes a tab portion, and may also include other portion of the battery cell, such as an electrode plate.

It should be understood that the battery cell sample images are annotated with a tab region and a tab misalignment region. The annotation may be performed using professional annotation tools, and may also be assisted by manual annotation, thereby improving the annotation accuracy.

In a specific implementation, the initial target detection network is the yolov5 target detection network, or may be other networks that implement target detection. This is not limited in this embodiment.

When model training is performed, the battery cell sample images are first input to the input layer in the initial target detection network, and image enhancement preprocessing, such as random transformation, cropping, and splicing, is performed on the battery cell sample images at the input layer, such that the battery cell sample images are configured as battery cell sample images with a richer and more complex feature and target combinations to serve as a training set of the model. This will improve the identification rate and robustness of the trained model for abnormal pictures and complex pictures. Then, the enhanced battery cell sample images are transmitted to the feature extraction layer of the yolov5 network to perform feature extraction, and the features of the image are output. Backone is used as a convolutional network. After the extracted features are obtained, feature fusion is performed by using the feature fusion layer, and the fused feature is transmitted to the output layer for prediction. The predicted tab region and tab misalignment region are output and compared with the test set to obtain a loss. When the loss value is less than a set threshold, the training of the model is completed, thus obtaining the first target detection model. The purpose of the training is to enable the position and class prediction information of the tab portion obtained for the input image to be similar to the annotated real information, thereby achieving the purpose of tab region detection.

In this embodiment, the battery cell sample images are obtained, and the battery cell sample images are annotated with the tab region and the tab misalignment region. Therefore, the initial target detection network is trained with the battery cell sample images of the tab region and the tab misalignment region, such that the position and misalignment region of the tab portion obtained for the input battery cell images are similar to the annotated real information, thereby achieving the purpose of detecting the tab position and the tab misalignment region.

In some embodiments, after the tab detection region is obtained, the image portion representing the tab portion in the battery cell images will be determined. Therefore, after obtaining the tab detection region, the defect detection method further includes:
cropping the battery cell images based on the tab detection region to obtain tab images.

It should be noted that the battery cell images may be cropped based on the tab detection region detected by the first target detection model to obtain the tab images containing only the tab, thereby obtaining the images of the specific tab portions. Therefore, the subsequent tab defect detection using the tab images is facilitated, and the detection precision is improved.

Illustratively, the coordinate information of the tab region is annotated in the tab detection region, such that the tab position will be quickly located, and the images are cropped to obtain images containing only the tab.

In this embodiment, after the tab detection region is identified, the battery cell images are cropped to obtain the tab images, thereby facilitating subsequent precise identification of the tab defects directly through the tab images.

In some embodiments, to improve the precision of tab defect detection, defect detection may be performed on the tab images obtained by the first target detection model, thereby improving the precision of tab defect detection.

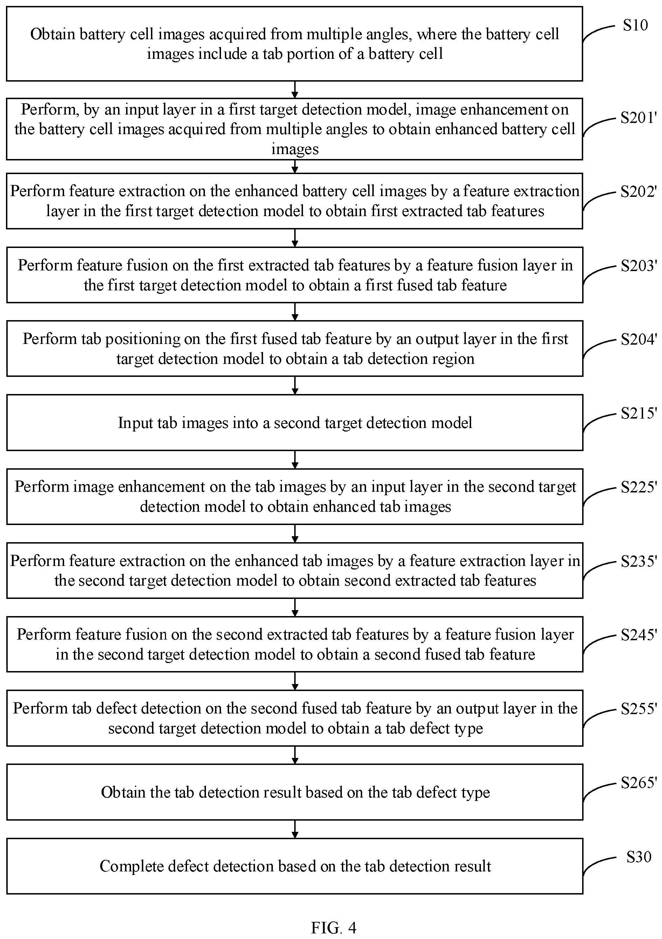

In some embodiments, referring to FIG. 4, the target detection model includes a second target detection model. The second target detection model is obtained by training with tab sample images annotated with a tab defect.

It should be noted that the second target detection model is obtained by training with tab sample images annotated with a tab defect, such that the tab defect and the tab defect type will be detected by the second target detection model.

Therefore, after the tab images are obtained, the tab images may be input into the second target detection model to perform specific tab defect detection. Therefore, the step of obtaining the tab detection result based on the tab detection region includes the following steps.

In step S215', the tab images are input into the second target detection model.

It should be noted that the input layer in the target detection model scales the image to achieve the purpose of accelerating training and prediction, such that a large amount of information is lost in the scaling process of the image. To improve the detection precision, the tab images containing only the tab may be input into the second target detection model for defect detection.

It should be noted that both the second target detection model and the first target detection model are obtained through training the initial target detection network. The architectures in the models are the same, and samples for training are different.

In step S225', image enhancement is performed on the tab images by an input layer in the second target detection model to obtain enhanced tab images.

In a specific implementation, image enhancement is first performed on the tab images by the input layer in the second target detection model (for example, operations such as cropping and splicing are performed on the tab images), so as to obtain the enhanced tab images.

In step S235', feature extraction is performed on the enhanced tab images by a feature extraction layer in the second target detection model to obtain second extracted tab features.

It should be understood that after the enhanced tab images are obtained, the enhanced tab images are transmitted to a feature extraction layer in the second target detection model, and the feature extraction of the enhanced tab images is performed by using the convolution operation in the feature extraction layer, thereby obtaining the second extracted tab features.

Illustratively, the second extracted tab features are features that represent different defects in the tab images, such as tab wrinkling and tab cracking.

In step S245', feature fusion is performed on the second extracted tab features by the feature fusion layer in the second target detection model to obtain a second fused tab feature.

In a specific implementation, after the second tab features are obtained, the second extracted tab features that have been extracted may be combined by using the feature fusion layer in the second target detection model, and the feature fusion layer performs operations such as up-sampling and feature splicing (concat) to transform the second extracted tab features. Finally, the features are divided into three outputs, and each output represents a feature in which targets of different sizes are summarized, so as to obtain the second fused tab features.

It should be understood that targets of different sizes may be predicted based on the second fused tab feature, for example, the specific type of tab defect and the tab defect position.

In step S255', tab defect detection is performed on the second fused tab feature by an output layer in the second target detection model to obtain a tab defect type.

It should be understood that the second fused tab feature may be transmitted to the output layer in the second target detection model for prediction, and the predicted tab defect position and specific defect type may be output.

Illustratively, the tab defect positioning may be performed on the second fused tab feature by the output layer in the second target detection model, so as to annotate the tab defect position in the tab image and annotate the defect type, such as "tab cracking" or "tab wrinkling".

In step S265', the tab detection result is obtained based on the tab defect type.

In a specific implementation, the tab defect type and the specific tab defect position may be used as the tab detection result.

In a specific implementation, although it is identified that the tab has a defect, if the defect is within the set standard value range, the final tab detection result is that the tab has no defect. Therefore, the tab may be further detected based on the tab defect type to determine whether the tab has a defect.

The tab detection result may be that the tab has a defect or the tab has no defect.

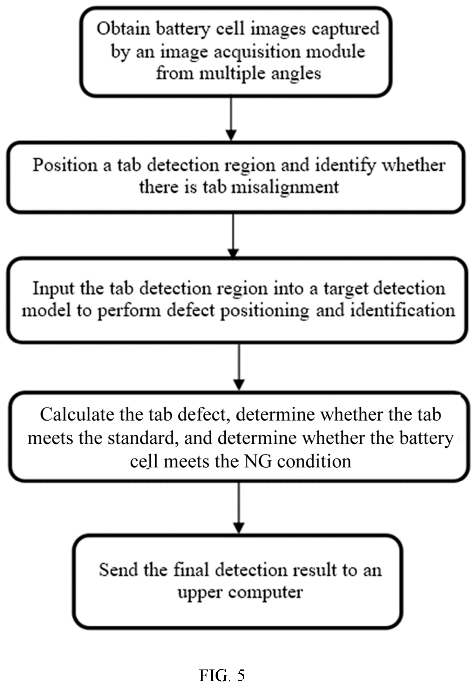

As shown in FIG. 5, FIG. 5 is an overall schematic flowchart of defect detection according to an embodiment. Battery cell images acquired by the image acquisition module from multiple angles are obtained, the tab detection region in the battery cell images is positioned by the first target detection model, and whether the tab misalignment exists is identified. The tab detection region is input into the second target detection model for defect positioning and type identification, so as to obtain the tab defect position and the tab defect type. The tab defect is calculated to determine whether the standard is met, thereby determining whether the battery cell meets the NG adjustment, and sending the result to the upper computer.

In the technical solution of the embodiment of the present application, by detecting the defect in the tab images using the second target detection model, the tab defect type is quickly detected, thereby solving the problem of tab misalignment in the battery cell production process and improving the identification rate of small defects and minor defects.

In some embodiments, after the tab defect is identified, it may be further detected whether the tab defect meets the production requirements, that is, whether the tab defect is within an allowable error range. For example, information such as the length or the area of the identified defective tab may be obtained for further analysis. Therefore, the step of obtaining the tab detection result based on the tab defect type includes:
obtaining a defect length corresponding to the tab defect type;
comparing the defect length with a preset length threshold; and
determining that the tab detection result is that the tab has a defect when the defect length is greater than the preset length threshold.

It should be noted that when detecting the tab defect, the second target detection model also annotates the defect length corresponding to the tab defect. Therefore, the defect lengths corresponding to different tab defect types may be obtained, so as to further determine whether the tab has a defect.

The preset length threshold is the error-allowed threshold specified in the industry. If the defect length exceeds the preset length threshold, it is determined that the tab has a defect, and if the defect length does not exceed the preset length threshold, it is determined that the tab has no defect.

Therefore, by comparing the defect length with the preset length threshold, it is determined that the tab detection result is that the tab has a defect when the defect length is greater than the preset length threshold.

In this embodiment, by obtaining the defect length corresponding to the tab defect type and comparing the defect length with the standard length threshold, it is quickly determined that the tab length has a defect.

In some embodiments, when the defect length is less than or equal to the preset length threshold, it is determined that the tab detection result is that the tab has no defect.

It should be noted that if the defect length is less than or equal to the preset length threshold, it is believed that the current tab defect is within the allowable error range, and the tab detection result is that the tab has no defect.

In this embodiment, by comparing the defect length with the standard length threshold, when the defect length is less than or equal to the standard length threshold, it is quickly determined that the tab length has no defect.

In some embodiments, whether the tab has a defect may also be determined by further analyzing the area of the identified tab defect, and the step of obtaining the tab detection result based on the tab defect type includes:
obtaining defect area corresponding to the tab defect type;
comparing the defect area with a preset area threshold; and
determining that the tab detection result is that the tab has a defect when the defect area is greater than the preset area threshold.

It should be noted that when detecting the tab defect, the second target detection model also annotates the defect area corresponding to the tab defect. Therefore, the defect area corresponding to different tab defect types may be obtained, so as to further determine whether the tab has a defect.

The preset area threshold is the error-allowed threshold specified in the industry. If the defect area exceeds the preset area threshold, it is determined that the tab has a defect, and if the defect length does not exceed the preset area threshold, it is determined that the tab has no defect.

Therefore, by comparing the defect area with the preset area threshold, it is determined that the tab detection result is that the tab has a defect when the defect area is greater than the preset area threshold.

In this embodiment, by obtaining the defect area corresponding to the tab defect type and comparing the defect area with the standard area threshold, it is quickly determined that the tab area has a defect.

In some embodiments, when the defect area is less than or equal to the preset area threshold, it is determined that the tab detection result is that the tab has no defect.

It should be noted that if the defect area is less than or equal to the preset area threshold, it is believed that the current tab defect is within the allowable error range, and the tab detection result is that the tab has no defect.

In the technical solution of the embodiment of the present application, by comparing the defect area with the standard area threshold, it is quickly determined that the tab area has no defect when the defect area is less than or equal to the standard area threshold.

In some embodiments, the second target detection model will quickly and accurately detect the defect position and the defect type of the tab in the tab image. Therefore, the process of establishing the second target detection model includes:
obtaining tab sample images, where the tab sample images are annotated with a tab defect; and
training an initial target detection network with the tab sample images to obtain the second target detection model.

It should be noted that the tab sample images may be acquired images of tab images of various different battery cells, or may be tab images of the battery cell in different forms, or may be tab images of the battery cell during different production processes. This is not limited in this embodiment.

It should be noted that the tab sample images may be obtained by detecting the tab region on the battery cell sample images through the first target detection model, or may be directly obtained by acquiring the tab portion through an image acquisition apparatus. This is not limited in this embodiment.

It should be understood that the tab sample images are annotated with a tab defect, including the tab defect position and the tab defect type. The annotation may be performed using professional annotation tools, and may also be assisted by manual annotation, thereby improving the annotation accuracy.

In a specific implementation, the initial target detection network is the yolov5 target detection network, or may be other networks that implement target detection. This is not limited in this embodiment.

When model training is performed, the tab sample images are first input to the input layer in the initial target detection network, and image enhancement preprocessing, such as random transformation, cropping, and splicing, is performed on the tab sample images at the input layer, such that the tab sample images are configured as tab sample images with a richer and more complex feature and target combinations to serve as a training set of the model. This will improve the identification rate and robustness of the trained model for abnormal pictures and complex pictures. Then, the enhanced tab sample images are transmitted to the feature extraction layer of the yolov5 network to perform feature extraction, and the features of the image are output. Backone is used as a convolutional network. After the extracted features are obtained, feature fusion is performed by using the feature fusion layer, and the fused feature is transmitted to the output layer for prediction. The predicted tab defect position and tab defect type are output and compared with the test set to obtain a loss. When the loss value is less than a set threshold, the training of the model is completed, thus obtaining the second target detection model. The purpose of the training is to enable the prediction information of the tab defect position and tab defect type obtained for the input image to be similar to the annotated real information, thereby achieving the purpose of tab defect detection.

In the technical solution of the embodiment of the present application, the tab sample images are obtained, the tab sample images are annotated with a tab defect, and the initial target detection network is trained with the tab sample images. Since a large amount of information is lost during the scaling of the image, the second target detection model is obtained by training with the tab sample images, thereby improving the model training precision.

In some embodiments, if it is identified that the tab has a defect, specific information is provided as a prompt or warning. Therefore, the step of completing the defect detection based on the tab detection result includes:
outputting a tab defect type and a tab defect position when the tab detection result is that the tab has a defect; and
determining that a battery cell corresponding to the tab does not meet production requirements and discarding the battery cell.

It should be noted that if the tab detection result is that the tab has a defect, the tab defect type and the tab defect position may be output to the upper computer.

Besides, the battery cell corresponding to the defective tab is marked as failing to meet the production requirements, and the battery cell may be proposed; for example, the battery cell is directly discharged into an NG bin.

The overall detection process is controlled within the production rhythm of the battery cell, and real-time tab defect detection will be achieved without affecting the production of the battery cell.

In this embodiment, when the tab detection result is that the tab has a defect, a specific tab defect type and a tab defect position may be output, such that the battery cell to which the tab having a defect belongs is determined to not meet the production requirements, and the battery cell is discarded, thereby achieving intelligent control of the production line, and effectively ensuring the production rhythm of the production line.

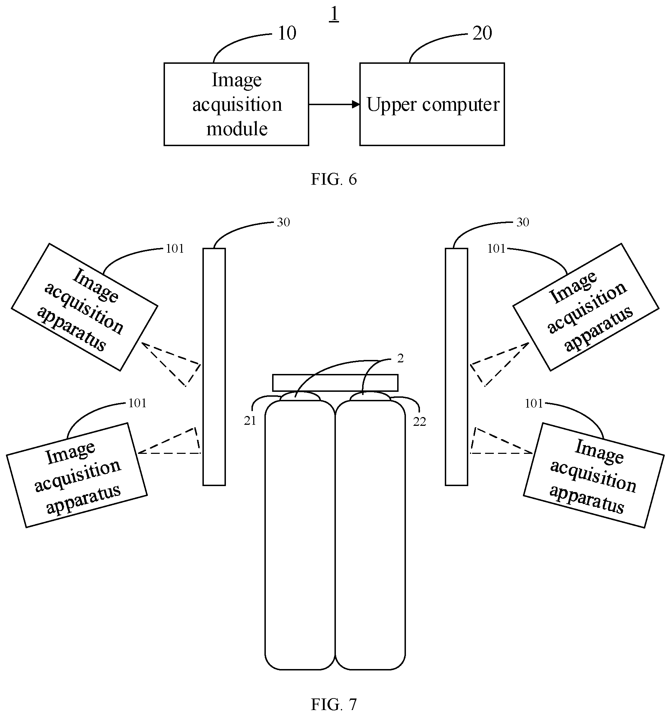

To achieve the above objective, an embodiment of the present application further provides a defect detection system 1, as shown in FIG. 6. FIG. 6 is a schematic structural diagram of a defect detection system 1 according to an embodiment of the present application.

In some embodiments, the defect detection system 1 includes:
an image acquisition module 10 configured to acquire battery cell images including a tab portion from multiple angles; and
an upper computer 20 configured to determine whether the tab has a defect based on the battery cell images acquired from multiple angles.

It should be noted that the image acquisition module 10 may be a device having an image acquisition function, such as a camera or an image sensor, or may be other devices capable of acquiring images. This is not limited in this embodiment.

There may be one or a plurality of image acquisition modules 10. Illustratively, there are a plurality of image acquisition modules, which may be disposed around the battery cell, so as to acquire battery cell images including the tab portion from multiple angles.

It should be noted that the image acquisition module 10 may be in communication connection with the upper computer 20, and the image acquisition module 10 sends the battery cell images including the tab portion acquired from multiple angles to the upper computer 20.

In a specific implementation, the upper computer 20 may receive the battery cell images and process the battery cell images to determine whether the tab has a defect.

In the technical solution of the embodiment of the present application, the image acquisition module acquires the battery cell images including the tab portion from multiple angles, such that a complete battery cell image is obtained, thereby improving the detection accuracy. Moreover, the upper computer determines whether the tab has a defect, thereby improving the efficiency and precision of the tab defect detection and the identification rate of minor defects of the tab.

In some embodiments, as shown in FIG. 7, FIG. 7 is still another schematic structural diagram of a defect detection system according to an embodiment of the present application.

In some embodiments, there are two image acquisition modules 10, each image acquisition module 10 includes at least two image acquisition apparatuses 101, and the two image acquisition modules 10 are respectively located at an end part of an anode tab 21 and an end part of a cathode tab 22.

The image acquisition module is configured to perform multi-angle image acquisition on the battery cell images including the tab portion to obtain battery cell images acquired from multiple angles, and configured to send the battery cell images to the upper computer.

It should be noted that the tabs 2 on the battery cell include an anode tab 21 and a cathode tab 22. Therefore, an image acquisition module 10 for the anode tab 21 and an image acquisition module 10 for the cathode tab 22 may be provided, so as to synchronously acquire images of the anode tab 21 and the cathode tab 22.

In a specific implementation, there are two image acquisition modules 10, which are respectively arranged at the end part of the anode tab 21 and the end part of the cathode tab 22. Each image acquisition apparatus 10 includes at least two image acquisition apparatuses 101, and the two image acquisition apparatuses 101 may be arranged at different angles. As shown in FIG. 7, one image acquisition apparatus 101 is arranged at the upper side, and the other image acquisition apparatus 101 is arranged at the lower side, so as to acquire images of the anode tab 21 or the cathode tab 22 in the battery cell from different angles.

Illustratively, the image acquisition apparatus 101 may be an apparatus having an image acquisition function, such as a camera or a scanner.

In some embodiments, there are two anode tabs and two cathode tabs; the image acquisition module 10 includes a first image acquisition module and a second image acquisition module (not shown in the figure);
the two image acquisition apparatuses 101 in the first image acquisition module 10 are respectively located at the end parts of the two anode tabs, and the two image acquisition apparatuses 101 in the second image acquisition module 10 are respectively located at the end parts of the two cathode tabs.

In a specific implementation, the battery cell is provided with two anode tabs and two cathode tabs, and two image acquisition apparatuses 101 are provided for each tab for image acquisition, so as to obtain battery cell images acquired from multiple angles.

By means of the plurality of image acquisition apparatuses, images of the anode tab or the cathode tab are acquired from multiple angles, such that the surface of the tab is completely acquired, and a complete tab image is obtained, thereby improving the detection accuracy.

Optionally, to improve the clarity of the acquired image, supplementary lighting may be provided when the image is acquired. Therefore, the defect detection system further includes at least one light source 30, and the at least one light source 30 and the image acquisition module 10 are disposed opposite to each other on two sides of the battery cell;
the at least one light source 30 is configured to provide a light source during the process of the image acquisition module 10 acquiring images of the battery cell including the tab portion.

It should be noted that when the image acquisition module 10 acquires the battery cell image, the light source may be used for supplementary lighting, thereby improving the capturing effect.

By further arranging the light source in the system, supplementary lighting is performed when the image acquisition apparatus acquires the battery cell image, such that a clear battery cell image including the tab portion is captured, thereby improving the capturing effect.

In the technical solution of the embodiment of the present application, two image acquisition modules are used to acquire a battery cell image including an anode tab and a battery cell image including a cathode tab, respectively, so as to perform tab defect detection separately, thereby preventing the mixing of the anode tab image and the cathode tab image from affecting the detection result.

The above description is only preferred embodiments of the present application and is not intended to limit the scope of the present application. Any equivalent structural transformations made based on the content of the specification and the drawings of the present application or any direct/indirect applications in other related technical fields under the spirit of the present application shall all fall within the scope of patent protection of the present application.

## Claims

1. A defect detection method, wherein the defect detection method comprises:
obtaining battery cell images acquired from multiple angles, the battery cell images comprising a tab portion of a battery cell;
performing, by a target detection model, tab defect detection on the battery cell images acquired from multiple angles to obtain a tab detection result, the target detection model being configured to perform tab positioning and tab defect identification; and
completing defect detection based on the tab detection result.

2. The defect detection method according to claim 1, wherein the target detection model comprises an input layer, a feature extraction layer, a feature fusion layer, and an output layer;
performing, by the target detection model, the tab defect detection on the battery cell images acquired from multiple angles to obtain the tab detection result comprises:
performing, by the input layer in the target detection model, image enhancement on the battery cell images acquired from multiple angles to obtain enhanced battery cell images;
performing feature extraction on the enhanced battery cell images by the feature extraction layer in the target detection model to obtain extracted features;
performing feature fusion on the extracted features by the feature fusion layer in the target detection model to obtain a fused feature; and
performing tab position detection or tab defect detection on the fused feature by the output layer in the target detection model to obtain the tab detection result.

3. The defect detection method according to claim 2, wherein performing the feature extraction on the enhanced battery cell images by the feature extraction layer in the target detection model to obtain the extracted features comprises:
performing multi-scale feature extraction on the enhanced battery cell images by a convolutional neural network in the feature extraction layer in the target detection model to obtain multi-scale extracted features.

4. The defect detection method according to claim 2, wherein the target detection model comprises a first target detection model, and the first target detection model is obtained by training with battery cell sample images annotated with a tab region and a tab misalignment region;
performing, by the target detection model, the tab defect detection on the battery cell images acquired from multiple angles to obtain the tab detection result comprises:
performing, by an input layer in the first target detection model, image enhancement on the battery cell images acquired from multiple angles to obtain enhanced battery cell images;
performing feature extraction on the enhanced battery cell images by a feature extraction layer in the first target detection model to obtain first extracted tab features;
performing feature fusion on the first extracted tab features by a feature fusion layer in the first target detection model to obtain a first fused tab feature;
performing tab positioning on the first fused tab feature by an output layer in the first target detection model to obtain a tab detection region; and
obtaining the tab detection result based on the tab detection region.

5. The defect detection method according to claim 4, wherein performing the tab positioning on the first fused tab feature by the output layer in the first target detection model to obtain the tab detection region comprises:
performing the tab positioning on the first fused tab feature by the output layer in the first target detection model, and annotating the tab detection region in the battery cell images and annotating a corresponding class to obtain the tab detection region.

6. The defect detection method according to claim 4, wherein the defect detection method further comprises:
cropping the battery cell images based on the tab detection region to obtain tab images.

7. The defect detection method according to claim 6, wherein the target detection model further comprises a second target detection model, and the second target detection model is obtained by training with tab sample images annotated with a tab defect;
obtaining the tab detection result based on the tab detection region comprises:
inputting the tab images into the second target detection model;
performing image enhancement on the tab images by an input layer in the second target detection model to obtain enhanced tab images;
performing feature extraction on the enhanced tab images by a feature extraction layer in the second target detection model to obtain second extracted tab features;
performing feature fusion on the second extracted tab features by a feature fusion layer in the second target detection model to obtain a second fused tab feature;
performing tab defect detection on the second fused tab feature by an output layer in the second target detection model to obtain a tab defect type; and
obtaining the tab detection result based on the tab defect type.

8. The defect detection method according to claim 7, wherein obtaining the tab detection result based on the tab defect type comprises:
obtaining a defect length corresponding to the tab defect type;
comparing the defect length with a preset length threshold; and
determining that the tab detection result is that the tab has a defect when the defect length is greater than the preset length threshold.

9. The defect detection method according to claim 8, wherein the defect detection method further comprises:
determining that the tab detection result is that the tab has no defect when the defect length is less than or equal to the preset length threshold.

10. The defect detection method according to claim 7, wherein obtaining the tab detection result based on the tab defect type comprises:
obtaining defect area corresponding to the tab defect type;
comparing the defect area with a preset area threshold; and
determining that the tab detection result is that the tab has a defect when the defect area is greater than the preset area threshold.

11. The defect detection method according to claim 10, wherein the defect detection method further comprises:
determining that the tab detection result is that the tab has no defect when the defect area is less than or equal to the preset area threshold.

12. The defect detection method according to claim 2, wherein performing the tab position detection or the tab defect detection on the fused feature by the output layer in the target detection model to obtain the tab detection result comprises:
performing the tab position detection or the tab defect detection on the fused feature by the output layer in the target detection model to obtain a tab position and a predicted target class; and
taking the tab position and the predicted target class as the tab detection result.

13. The defect detection method according to claim 6, wherein obtaining the tab detection result based on the tab detection region comprises:
detecting whether there is tab misalignment in the tab detection region; and
determining the tab detection result as tab misalignment when there is tab misalignment in the tab detection region.

14. The defect detection method according to claim 13, wherein detecting whether there is tab misalignment in the tab detection region comprises:
comparing an image of the tab detection region with an image without tab misalignment, and determining whether there is tab misalignment in the tab detection region based on a comparison result.

15. The defect detection method according to claim 13, wherein the defect detection method further comprises:
cropping a region with tab misalignment from the tab images to obtain cropped tab images.

16. The defect detection method according to any one of claims 1 to 15, wherein the target detection model comprises a first target detection model and a second target detection model, and performing, by the target detection model, the tab defect detection on the battery cell images acquired from multiple angles to obtain the tab detection result comprises:
positioning a tab detection region in the battery cell images by the first target detection model, and identifying whether there is tab misalignment to obtain the tab detection region;
inputting cropped tab images in the tab detection region into the second target detection model for defect positioning and type identification to obtain a tab defect position and a tab defect type; and
obtaining the tab detection result based on the tab defect position and the tab defect type.

17. The defect detection method according to any one of claims 1 to 16, wherein before performing, by the target detection model, the tab defect detection on the battery cell images acquired from multiple angles to obtain the tab detection result, the method further comprises:
obtaining battery cell sample images, wherein the battery cell sample images are annotated with a tab region and a tab misalignment region; and
training an initial target detection network with the battery cell sample images to obtain a first target detection model.

18. The defect detection method according to any one of claims 1 to 17, wherein before performing, by the target detection model, the tab defect detection on the battery cell images acquired from multiple angles to obtain the tab detection result, the method further comprises:
obtaining tab sample images, wherein the tab sample images are annotated with a tab defect; and
training an initial target detection network with the tab sample images to obtain a second target detection model.

19. The defect detection method according to any one of claims 1 to 18, wherein completing the defect detection based on the tab detection result comprises:
outputting a tab defect type and a tab defect position when the tab detection result is that the tab has a defect; and
determining that a battery cell corresponding to the tab does not meet production requirements and discarding the battery cell.

20. A defect detection system, wherein the defect detection system comprises:
an image acquisition module configured to acquire battery cell images comprising a tab portion from multiple angles; and
an upper computer configured to determine whether the tab has a defect based on the battery cell images acquired from multiple angles.

21. The defect detection system according to claim 20, wherein there are two image acquisition modules, each image acquisition module comprises at least two image acquisition apparatuses, and the two image acquisition modules are respectively located at an end part of an anode tab and an end part of a cathode tab;
the image acquisition module is configured to perform multi-angle image acquisition on battery cell images comprising a tab portion to obtain battery cell images acquired from multiple angles, and configured to send the battery cell images to the upper computer.

22. The defect detection system according to claim 21, wherein there are two anode tabs and two cathode tabs; the image acquisition module comprises a first image acquisition module and a second image acquisition module;
two image acquisition apparatuses in the first image acquisition module are respectively located at end parts of the two anode tabs, and two image acquisition apparatuses in the second image acquisition module are respectively located at end parts of the two cathode tabs.

23. The defect detection system according to any one of claims 20 to 22, wherein the system further comprises at least one light source, and the at least one light source and the image acquisition module are disposed opposite to each other on two sides of a battery cell;
the at least one light source is configured to provide a light source during an image acquisition process of the image acquisition module acquiring images of the battery cell comprising a tab portion.
